# EUROPEAN PATENT SPECIFICATION

(11) **EP 3 270 456 B1**
(45) Date of publication and mention of the grant of the patent: **09.08.2023**
(21) Application number: 16764551.4
(22) Date of filing: 01.02.2016
(51) Int. Cl.: H01M 12/06, H01M 12/08, C25B 11/04, C01F 17/00, H01M 4/86, H01M 4/90, C25B 1/04, C25B 11/00, C25B 11/077

(54) **AIR ELECTRODE, WATER ELECTROLYSIS ANODE, METAL AIR CELL, AND WATER ELECTROLYSIS DEVICE**
LUFTELEKTRODE, WASSERELEKTROLYSEANODE, METALL-LUFT ZELLE UND WASSERELEKTROLYSEVORRICHTUNG
ÉLECTRODE À AIR, ANODE D'ÉLECTROLYSE DE L'EAU, PILE MÉTAL/AIR, ET DISPOSITIF D'ÉLECTROLYSE DE L'EAU

(30) Priority: 13.03.2015 JP 2015051250
(43) Date of publication of application: 17.01.2018
(73) Proprietor: NGK Insulators, Ltd., Nagoya-shi, Aichi 467-8530 (JP)
(72) Inventor: HATTORI, Tatsuya, Nagoya-Shi Aichi 467-8530 (JP); YAMAMURA, Yoshihiko, Nagoya-Shi Aichi 467-8530 (JP); KITOH, Kenshin, Nagoya-Shi Aichi 467-8530 (JP); YAMADA, Naohito, Nagoya-Shi Aichi 467-8530 (JP); SAITO, Naomi, Nagoya-Shi Aichi 467-8530 (JP)
(74) Representative: MERH-IP Matias Erny Reichl Hoffmann Patentanwälte PartG mbB
(86) International application number: PCT/JP2016/052956
(87) International publication number: WO 2016/147720

(56) References cited:
- WO-A1-2012/023013
- WO-A1-2012/056301
- WO-A1-2012/081485
- WO-A1-2013/161516
- JP-A- 2012 049 115
- JP-A- 2012 198 990
- JP-A- 2013 077 551
- JP-A- 2013 164 983
- JP-A- 2014 199 807
- JP-A- 2014 225 434
- JP-A- 2014 225 435
- JP-A- 2015 037 004
- JP-B1- 5 605 890
- US-A1- 2011 236 789
- US-A1- 2014 333 264

## Description

### TECHNICAL FIELD

The present invention relates to an air electrode for a metal-air battery, an anode for a water electrolysis apparatus (hereinafter, referred to as water electrolysis anode), a metal-air battery, and a water electrolysis apparatus.

### BACKGROUND ART

One candidate of innovative batteries is a metal-air battery. In a metal-air battery, which is fed with oxygen (i.e., a positive-electrode active material) from air, the space in a battery container can be maximally filled with a negative-electrode active material. Thus, the metal-air battery can achieve high energy density in principle. For example, a zinc-air battery, which contains zinc as a negative-electrode active material, includes an alkaline electrolytic solution (i.e., an aqueous solution of an alkali, such as potassium hydroxide) and a separator for preventing the short circuit between the positive and negative electrodes. During a discharge mode of the battery, O₂ is reduced to generate OH⁻ at the air electrode (positive electrode) and zinc is oxidized to generate ZnO at the negative electrode as illustrated in the following formulae. During a charge mode of the battery, the reversed reaction of the following reaction occurs.
Air Electrode (Positive electrode): O₂ + 2H₂O + 4e⁻ → 4OH⁻
Negative electrode: 2Zn + 4OH⁻ → 2ZnO + 2H₂O + 4e⁻

Patent Document 1 (WO2013/073292) discloses a zinc-air secondary battery including a separator composed of a hydroxide-ion-conductive inorganic solid electrolyte for preventing dendritic growth of zinc, wherein the inorganic solid electrolyte is disposed on one surface of an air electrode, and the inorganic solid electrolyte is a hydrothermally solidified dense layered double hydroxide (LDH) represented by the formula: M²⁺₁₋ₓM³⁺ₓ(OH)₂Aⁿ⁻_{x/n}·mH₂O (where M²⁺ represents a divalent cation, M³⁺ represents a trivalent cation, and Aⁿ⁻ represents an n-valent anion). The air electrode, which is disposed on the inorganic solid electrolyte (separator), is composed of a particulate catalyst, such as platinum, and a particulate electrically conductive material, such as carbon material.

Patent Document 2 (WO2013/161516) discloses a lithium-air secondary battery including an anion exchange membrane composed of a hydroxide-ion-conductive inorganic solid electrolyte, wherein the inorganic solid electrolyte is disposed on one surface of an air electrode, and the inorganic solid electrolyte is a hydrothermally solidified dense layered double hydroxide (LDH). The air electrode, which is disposed on the inorganic solid electrolyte (anion exchange membrane), is composed of a particulate catalyst, such as platinum, and a particulate electrically conductive material, such as carbon material. In this configuration, the anion exchange membrane composed of a hydroxide-ion-conductive inorganic solid electrolyte intervening between an air electrode and an alkaline electrolytic solution allows only OH⁻ generated at the air electrode to pass through the alkaline electrolytic solution and can inhibit contamination with undesirable materials, such as carbon dioxide contained in air. In addition, the intervention of the anion exchange membrane inhibits the migration of Li⁺ in the alkaline electrolytic solution to the air electrode and thereby prevents generation of LiOH precipitate in pores in the air electrode to avoid a problem in clogging the pores. Thus, OH⁻, not Li⁺, is conducted between the air electrode and the electrolytic solution by the intervention of the hydroxide-ion-conductive inorganic solid electrolyte. Accordingly, during the discharge mode, lithium is dissolved at the negative electrode to generate Li⁺, whereas O₂ is reduced to generate OH⁻ at the air electrode (positive electrode) as shown in the following reaction formulae. During a charge mode of the battery, the reversed reaction of the following reaction occurs.
Air Electrode (Positive electrode): O₂ + 2H₂O + 4e⁻ → 4OH⁻
Negative electrode: Li → Li⁺ + e⁻

Thus, in the above-described zinc-air secondary battery and lithium-air secondary battery, the air electrode generates or utilizes OH⁻ and, for example, contains a particulate catalyst, such as platinum, and a particulate electrically conductive material, such as a carbon material.

i Other examples of the application of such an electrode utilizing OH⁻ include a water electrolysis apparatus. The water electrolysis apparatus produces hydrogen through electrolysis of H₂O to H₂ and O₂ and has a structure where an electrolyte is disposed between an anode and a cathode. Electrolytes are categorized into two types: proton conductive (acidic) electrolytes and hydroxide-ion conductive (alkaline) electrolytes; and i each type includes a solid electrolyte and an electrolytic solution. That is, electrolytes are classified into four types. In a case using a hydroxide-ion conductive (alkaline) electrolytic solution, during electrolysis, OH⁻ is oxidized at the anode to generate O₂, whereas H₂O is reduced at the cathode to generate H₂, as shown by the following reaction formulae:
i Anode: 4OH⁻ → O₂ + 2H₂O + 4e⁻
Cathode: 4H₂O + 4e⁻ → 2H₂ + 4OH⁻

Incidentally, there are materials containing components represented by LaNi_{1-x-y}CuₓFe_{y}O_{3-δ} (where x > 0, y > 0, x + y < 1, and 0 ≤ δ ≤ 0.4) (see, e.g., Patent Document 3: ) JP4995327B). Patent Document 3 discloses that such a material shows desirable conductivity and coefficient of thermal expansion at high temperature in air and is therefore suitable as a material for the current collector layer of a fuel cell, in particular, a solid oxide fuel cell (SOFC). The air electrode of an SOFC generates O²⁻ from O₂ and does not generate or use OH⁻, unlike the air electrode of the above-described metal-air battery and the anode of a water electrolysis apparatus (water electrolysis anode).
US 2011/0236789 A1 discloses an electrode that can be used at high temperatures in air, a fuel cell using the material, and a method of manufacture of the same. The electrode material containing a component expressed by La₁₋ₛAₛNi_{1-x-y-z}CuₓFe_{y}B_{z}O_{3-δ} (wherein, A and B are at least one element independently selected from the group consisting of alkaline earth metals, transition metals excluding Fe, Ni and Cu, and rare earths excluding La, and x>0, y>0, x+y+z<1, 0≦s≦0.05, and 0≦z≦0.05) exhibits relatively high conductivity at high temperature, and has the advantage of combination with other materials in relation to coefficient of thermal expansion.

### CITATION LIST

### PATENT DOCUMENTS

Patent Document 1: WO2013/073292

### SUMMARY OF INVENTION

An air electrode or water electrolysis anode causes a reaction of reducing or generating oxygen and is therefore required to have electron conductivity, ion conductivity, catalytic activity, and gas diffusibility and is generally a porous material composed of a mixture of a plurality of materials showing each performance. In particular, carbon black is usually used as an electronic conductor and a catalyst, but has problems of an insufficient catalytic activity and oxidative deterioration by, for example, oxygen in air.

The present inventors have found that materials represented by LaNi_{1-x-y}CuₓFe_{y}O_{3-δ} (where x > 0, y > 0, x + y < 1, and 0 ≤ δ ≤ 0.4), which are known as current collector materials, show not only electron conductivity but also a catalytic function and therefore can be preferably used as air electrode catalysts or water electrolysis anode catalysts. More specifically, the inventors have found that an electron-conductive material having the above-mentioned composition used as an alternative material of carbon black can achieve a catalytic activity higher than that of carbon black as an air electrode catalyst or water electrolysis anode catalyst. An advantage that this electron-conductive material is an oxide and does not have a risk of oxidative degradation was also found.

It is an object of the present invention to provide an air electrode or water electrolysis anode showing a higher catalytic activity than carbon black and not having a risk of oxidative degradation, i.e., to provide an air electrode for a metal-air battery or an anode for a water electrolysis apparatus.

The present invention provides an air electrode or water electrolysis anode for a metal-air battery or water electrolysis apparatus according to claim 1.

An embodiment of the present invention provides a separator-equipped air electrode, comprising said air electrode and a hydroxide-ion conductive separator disposed on one side of the air electrode.

Still another embodiment of the present invention provides a solid electrolyte-equipped water electrolysis anode, comprising said water electrolysis anode and a hydroxide-ion conductive solid electrolyte disposed on one side of the water electrolysis anode.

A further embodiment of the present invention provides a metal-air battery comprising said air electrode or the separator-equipped air electrode according to the embodiment above, a metal negative electrode, and an electrolytic solution.

Yet still another embodiment of the present invention provides a water electrolysis apparatus comprising said water electrolysis anode, a cathode, and a hydroxide-ion conductive solid electrolyte and/or a hydroxide-ion conductive electrolytic solution.

### BRIEF DESCRIPTION OF DRAWINGS

Fig. 1 is a schematic diagram showing an embodiment of a water electrolysis apparatus including a hydroxide-ion conductive electrolytic solution according to the present invention.
Fig. 2 is a schematic diagram showing an embodiment of a water electrolysis apparatus including a hydroxide-ion conductive solid electrolyte according to the present invention.
Fig. 3 is a schematic diagram showing an embodiment of a water electrolysis apparatus including a hydroxide-ion conductive solid electrolyte and a hydroxide-ion conductive electrolytic solution according to the present invention.
Fig. 4 is a schematic diagram showing another embodiment of a water electrolysis apparatus including a hydroxide-ion conductive solid electrolyte and a hydroxide-ion conductive electrolytic solution according to the present invention.
Fig. 5 is a schematic diagram showing the structure of an electrochemical measurement system for measuring potential drop.

### DESCRIPTION OF EMBODIMENTS

### Air electrode and water electrolysis anode

The air electrode or water electrolysis anode according to the present invention is used in a metal-air battery (in particular, metal-air secondary battery) or a water electrolysis apparatus. The air electrodes and water electrolysis anodes in these applications are typically intended to cause a reaction of generating and/or oxidizing OH⁻.

The metal-air batter including an air electrode of the present invention at least includes the air electrode, a metal negative electrode, and an electrolytic solution. A preferred structure is intended to include a hydroxide-ion conductive separator, an air electrode serving as a positive electrode in close contact with one side of this separator and, a metal negative electrode disposed adjacent to the other side of the separator, and an electrolytic solution contained between the air electrode layer and the negative electrode with the separator therebetween. Preferred examples of the metal-air battery having such a structure include the zinc-air secondary battery and the lithium-air secondary battery disclosed in Patent Documents 1 and 2.

The water electrolysis apparatus including a water electrolysis anode of the present invention at least includes a hydroxide-ion conductive solid electrolyte and/or a hydroxide-ion conductive electrolytic solution. Such a water electrolysis apparatus preferably includes a water electrolysis anode, a cathode, and a hydroxide-ion conductive solid electrolyte and/or a hydroxide-ion conductive electrolytic solution. At least, the hydroxide-ion conductive solid electrolyte and/or the hydroxide-ion conductive electrolytic solution intervenes between the water electrolysis anode and the cathode. The water electrolysis apparatus most preferably includes a hydroxide-ion conductive solid electrolyte. In comparison with the water electrolysis apparatus including a hydroxide-ion conductive electrolytic solution, the water electrolysis apparatus including a hydroxide-ion conductive solid electrolyte has the following advantages: 1) Pure water is fed instead of a corrosive alkaline aqueous solution facilitates the maintenance of the apparatus; 2) The dense solid electrolyte simplifies the control of differential pressure between electrodes (a liquid electrolyte requires strict control of the differential pressure between electrodes for preventing the generated H₂ and O₂ gases from permeating through the electrolytes and being mixed with each other); and 3) The current density can be increased to enhance the performance of the apparatus (if the electrolyte is a liquid, an increase in current density allows H₂ and O₂ gas bubbles to remain in the electrolytic solution to reduce the ion conductivity of the electrolytic solution, resulting in an increase in resistance). The advantages 1) to 3) correspond not only to the case of using a hydroxide-ion conductive solid electrolyte but also to the case of using a proton conductive solid electrolyte, however, the case of using a hydroxide-ion conductive solid electrolyte, unlike the case of using a proton conductive solid electrolyte, also has a further advantage: 4) A non-noble metal material can be used for an electrode to reduce the cost (in the case of using a proton conductive solid electrolyte, a noble metal is used for an electrode, leading to an increase in raw material cost).

The air electrode or water electrolysis anode according to the present invention contains an electron-conductive material (hereinafter, abbreviated as LNFCu) represented by LaNi_{1-x-y}CuₓFe_{y}O_{3-δ} (where x > 0, y > 0, x + y < 1, and 0 ≤ δ ≤ 0.4). The use of the LNFCu having such a composition as an electron-conductive material can provide an air electrode or water electrolysis anode having a catalytic activity higher than that of carbon black and not having a risk of oxidative degradation. That is, carbon black has been usually used as an electronic conductor and a catalyst, but has an insufficient catalytic activity and has a problem of oxidative deterioration by, for example, oxygen in air. In this regard, the use of the LNFCu as an air electrode catalyst or water electrolysis anode catalyst as an alternative material of carbon black can achieve a catalytic activity higher than that of carbon black. In addition, the LNFCu is an oxide and does not cause a risk of oxidative degradation. Thus, in the present invention, the electron-conductive material (LNFCu) also functions as an air electrode catalyst or water electrolysis anode catalyst. Accordingly, the air electrode or water electrolysis anode catalyst of the present invention does not need to contain an expensive material, such as Pt, which can be used as an air electrode catalyst or water electrolysis anode catalyst, as an essential component, and can be provided as an inexpensive electrode material.

The air electrode or water electrolysis anode of the present invention contains an electron-conductive material (LNFCu) represented by LaNi_{1-x-y}CuₓFe_{y}O_{3-δ} (where x > 0, y > 0, x + y < 1, and 0 ≤ δ ≤ 0.4). The subscript x preferably satisfies x ≤ 0.5, more preferably 0.01 ≤ x ≤ 0.5, and most preferably 0.05 ≤ x ≤ 0.30. The subscript y preferably satisfies y ≤ 0.3 and more preferably 0.01 ≤ y ≤ 0.3. Within these ranges, not only the conductivity and coefficient of thermal expansion are increased, but also the catalytic activity is significantly increased. In addition, a high conductivity can be achieved when δ ≤ 0.4 is satisfied. If δ is lower than 0.0, the oxygen partial pressure during production is required to be high, leading to a high cost. Accordingly, δ should be 0.0 or higher.

The LNFCu preferably has a perovskite crystal phase and is more preferably composed of a single perovskite phase. In such a case, higher conductivity and catalytic activity are achieved. Ni in LaNiO₃ is typically all trivalent, but Ni is partially divalent in some cases. A heterogeneous phase derived from divalent Ni is represented by the formula: Laₙ₊₁NiₙO₃ₙ₊₁ (where, n is 1, 2, or 3). For example, if n is 3, the heterogeneous phase is represented by La₄Ni₃O₁₀ and contains four La³⁺ ions, two Ni³⁺ ions, and one Ni²⁺ ion. A high conductivity is achieved in the case that the electrode material does not have a heterogeneous phase or in the case that the abundance ratio of the heterogeneous phase is low. The heterogeneous phase shows a peak at 31.2° to 32.3° in X-ray diffraction (XRD). Accordingly, it is preferred for achieving high conductivity and catalytic activity that no peak or a small peak appears at this position.

The LNFCu may have a particle shape or any other shape, but is preferably used in a form inducing a phase (i.e., electron-conductive phase) continuous in the thickness direction in the air electrode or water electrolysis anode. For example, the LNFCu may be a porous material. The content of the LNFCu in the air electrode or water electrolysis anode is 15 to 70 vol% based on the total amount (100 vol%) of the LNFCu and an hydroxide-ion conductive material, more preferably 20 to 60 vol%.

The LNFCu can be produced by firing a raw material containing La, Ni, Cu, and Fe in a molar ratio of La:Ni:Cu:Fe = 1:(1-x-y):x:y (where x > 0, y > 0, and x + y < 1) at a temperature of 1200°C or less. This production process may include preparation of the raw material containing La, Ni, Cu, and Fe in this ratio. The raw material that is used in the firing step may be prepared by mixing powders of oxides and/or hydroxides of the above-mentioned metals or by coprecipitation or solution phase synthesis using metal alkoxides or metal nitrates as starting materials. Preferred ranges of x, y, and δ are the same as those described above. Since Ni and Cu are readily reduced in air at high temperature, the firing step in production of the LNFCu is preferably performed at 1200°C or less in order to adjust the value δ within a preferred range, and the firing step is preferably performed in an oxygen atmosphere at 1200°C or less. The firing step may be performed as one treatment step or may include two or more heat treatments at different temperature conditions. In at least one treatment of these treatments, the above-mentioned material may be heat-treated at a temperature of 1100°C or more. The firing step may include a heat treatment at a temperature of lower than 1100°C. In every heat treatment, the temperature condition can be set to 1200°C or less. Fe has a relatively low reactivity, but readily forms a single-phase perovskite structure during heat treatment at 1100°C or more of the raw material. In addition, before the firing step, the raw material may be calcined at 1100°C or more. If calcination is performed, the temperature in the firing step may be less than 1100°C. The calcination step may also be performed at 1200°C or less. The firing conditions, such as firing temperature and firing time, are varied depending on the particle diameter and other factors of the raw material.

In the air electrode or water electrolysis anode of the present invention, since the LNFCu also functions as an air electrode catalyst or water electrolysis anode catalyst, another air electrode catalyst or water electrolysis anode catalyst, which is included in a known air electrode or water electrolysis anode, is unnecessary. Accordingly, the air electrode or water electrolysis anode of the present invention typically does not contain any air electrode catalyst or water electrolysis anode catalyst other than the LNFCu. However, the air electrode or water electrolysis anode may contain another air electrode catalyst or water electrolysis anode catalyst within the scope of the present invention. Examples of another such air electrode catalyst or water electrolysis anode catalyst include carbon materials having a redox catalytic function, such as carbon nanotubes; metals having a redox catalytic function, such as platinum and nickel; inorganic oxides having a redox catalytic function, such as perovskite oxides, manganese oxide, nickel oxide, cobalt oxide, and spinel oxides; and nitrides and carbides having a redox catalytic function. Another such air electrode catalyst or water electrolysis anode catalyst may have any shape and preferably has a particle shape.

The air electrode or water electrolysis anode of the present invention includes an LNFCu as an electron-conductive material and does not need another electron-conductive material, such as carbon black, that has been used as an electron-conductive material. Accordingly, the air electrode or water electrolysis anode of the present invention typically does not contain any electron-conductive material other than the LNFCu. However, the air electrode or water electrolysis anode may contain another electron-conductive material within the scope of the present invention. Examples of another such electron-conductive material include carbon materials, such as carbon nanotubes; electrically conductive fibers, such as carbon fibers and metal fibers; powdery metals, such as copper, silver, nickel, and aluminum; organic electron-conductive materials, such as polyphenylene derivatives; ceramic materials, such as oxides, nitrides, carbides, and silicides, having electron conductivity; and mixtures of these materials.

The air electrode or water electrolysis anode of the present invention further contains a hydroxide-ion conductive material. The hydroxide-ion conductive material can significantly reduce the reaction resistance of the air electrode or water electrolysis anode and thus improve the air electrode characteristics or water electrolysis anode characteristics. The hydroxide-ion conductive material may be any inorganic material or organic material that can conduct or permeate hydroxide ions and have any quality and shape. The hydroxide-ion conductive material may be in a particulate form or may be in a coating membrane form partially or substantially entirely covering the LNFCu and optional another electron-conductive material. It is preferred that the ion conductive material is not dense and has open pores even in the coating membrane form and diffuse O₂ and H₂O through the pores from the outer surface of the air electrode or water electrolysis anode toward the surface on the opposite side (e.g., interface with the separator or the solid electrolyte). The amount of the hydroxide-ion conductive material contained in the air electrode or water electrolysis anode is preferably 5 to 95 vol%, more preferably 5 to 85 vol%, and most preferably 10 to 80 vol% based on the total amount of the LNFCu and the hydroxide-ion conductive material.

In a preferred embodiment of the present invention, the hydroxide-ion-conductive material comprises a layered double hydroxide having a fundamental composition represented by the formula: M²⁺₁₋ₓM³⁺ₓ(OH)₂Aⁿ⁻_{x/n}·mH₂O (where M²⁺ represents at least one divalent cation, M³⁺ represents at least one trivalent cation, Aⁿ⁻ represents an n-valent anion, n is an integer of 1 or more, x is 0.1 to 0.4, and m is 0 or more). In the formula, M²⁺ may represent any divalent cation, and is preferably Ni²⁺, Mg²⁺, Ca²⁺, Mn²⁺, Fe²⁺, Co²⁺, Cu²⁺, or Zn²⁺, more preferably Ni²⁺. M³⁺ may represent any trivalent cation, and is preferably Fe³⁺, Al³⁺, Co³⁺, Cr³⁺, or In³⁺, more preferably Fe³⁺. Aⁿ⁻ may represent any anion, and is preferably NO³⁻, CO₃²⁻, SO₄²⁻, OH⁻, Cl⁻, I⁻, Br, or F⁻, more preferably NO³⁻ and/or CO₃²⁻. In the formula, preferably, M²⁺ comprises Ni²⁺, M³⁺ comprises Fe³⁺, and Aⁿ⁻ comprises NO³⁻ and/or CO₃²⁻. In the formula, n is an integer of 1 or more, preferably 1 to 3; x is 0.1 to 0.4, preferably 0.2 to 0.35; and m is 0 or more, typically a real or integer number exceeding 0 or not less than 1. In another preferred embodiment of the present invention, the hydroxide-ion-conductive material may have at least one fundamental composition selected from the group consisting of hydrates of NaCo₂O₄, LaFe₃Sr₃O₁₀, Bi₄Sr₁₄Fe₂₄O₅₆, NaLaTiO₄, RbLaNb₂O₇, and KLaNb₂O₇ and Sr₄Co_{1.6}Ti_{1.4}O₈(OH)₂·xH₂O. These inorganic solid electrolytes can be prepared through reduction and hydration of a dense sintered compact having the aforementioned fundamental composition.

In another preferred embodiment of the present invention, the hydroxide-ion-conductive material may contain a polymer material having hydroxide ion conductivity, or may be a mixture or composite of such a polymer material and the aforementioned layered double hydroxide. The hydroxide-ion-conductive polymer material is preferably a polymer material having a hydroxide-ion-permeable anion-exchange group. Preferred examples of the hydroxide-ion-conductive polymer material include polymer compounds; for example, hydrocarbon resins having anion-exchange groups, such as quaternary ammonium, pyridinium, imidazolium, phosphonium, and sulfonium groups (e.g., polystyrene, polysulfones, polyethersulfone, poly(ether ketone), polyphenylene, polybenzimidazole, polyimide, and poly(arylene ether)) and fluororesins.

The air electrode or water electrolysis anode may be formed by any method that can finally form a desired form (typically a layer) containing the LNFCu and a hydroxide-ion conductive material. For example, the air electrode or water electrolysis anode may be formed as follows: The LNFCu and a hydroxide-ion conductive material are wet-mixed with a solvent, such as ethanol; the mixture is dried and cracked and is then mixed with a binder for fibrillation; the resulting fibrillated mixture is press-bonded to a current collector to form an air electrode layer or water electrolysis anode layer; and the air electrode layer side of the air electrode layer/current collector laminated sheet or the water electrolysis anode side of the water electrolysis anode layer/current collector laminated sheet is press-bonded to a separator or a solid electrolyte. Alternatively, the air electrode layer or water electrolysis anode layer may be formed by wet-mixing the LNFCu and a hydroxide-ion conductive material with a solvent, such as ethanol, to form a slurry; and applying this slurry to a separator or a solid electrolyte and drying the slurry.

Thus, the air electrode or water electrolysis anode may contain a binder. The binder may be a thermoplastic resin or a thermosetting resin. Preferred examples of the binder include polyethylene, polypropylene, polytetrafluoroethylene (PTFE), poly(vinylidene fluoride) (PVDF), styrene-butadiene rubbers, tetrafluoroethylene-hexafluoroethylene copolymers, tetrafluoroethylene -hexafluoropropylene copolymers (FEP), tetrafluoroethylene-perfluoroalkyl vinyl ether copolymers (PFA), vinylidene fluoride-hexafluoropropylene copolymers, vinylidene fluoride-chlorotrifluoroethylene copolymers, ethylene-tetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers, (ECTFE), vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers, carboxymethyl cellulose (CMC), methyl cellulose (MC), cellulose acetate phthalate (CAP), hydroxypropylmethyl cellulose (HPMC), hydroxypropylmethyl cellulose phthalate (HPMCP), poly(vinyl alcohol) (PVA), and mixtures of these resins.

In a preferred embodiment of the present invention, the content by volume of the hydroxide-ion conductive material in the air electrode or water electrolysis anode may increase stepwise or gradually from the outer surface of the air electrode or water electrolysis anode (the side being in contact with the outside air) toward the surface on the opposite side (e.g., interface with the separator or the solid electrolyte). With this configuration, in the outside of the air electrode or water electrolysis anode, a relatively small amount of the hydroxide-ion conductive material leads to an increase in contact area between the air electrode catalyst or water electrolysis anode catalyst and, for example, air, resulting in promotion of the catalytic reaction. Hydroxide ions generated by the catalytic reaction can be efficiently conducted to the separator or the hydroxide-ion conductive solid electrolyte by ensuring a large number of conduction paths for the hydroxide ions from the outer surface of the air electrode or water electrolysis anode toward the inner surface. The ion conductive material may be in a particulate form or a coating membrane form. It is preferred that the ion conductive material in a coating membrane form is not dense and has open pores and diffuse O₂ and H₂O in the pores from the outer surface of the air electrode or water electrolysis anode toward the surface on the opposite side or in the opposite direction. The content by volume of the hydroxide-ion conductive material in the vicinity of the inner surface (e.g., interface with the separator or the solid electrolyte) of the air electrode or water electrolysis anode is preferably 1.2 times or more, 1.5 times or more, 2.0 times or more, 2.5 times or more, or 3.0 times or more the content of the hydroxide-ion conductive material in the vicinity of the outer surface of the air electrode or water electrolysis anode. For example, the air electrode or water electrolysis anode preferably includes a first layer having a relatively high content of the hydroxide-ion conductive material and a second layer having a relatively low content of the hydroxide-ion conductive material such that the first layer can be in contact with the separator or the hydroxide-ion conductive solid electrolyte and that the second layer can be exposed to external air. In this case, the content by volume of the hydroxide-ion conductive material in the first layer may be 1.2 times or more, 1.5 times or more, 2.0 times or more, 2.5 times or more, or 3.0 times or more that of the hydroxide-ion-conductive material in the second layer.

The air electrode or water electrolysis anode is typically in a layer form, and the layered air electrode or water electrolysis anode (i.e., air electrode layer or water electrolysis anode layer) preferably has a thickness of 5 to 50 µm, more preferably 5 to 40 µm, more preferably 5 to 35 µm, and most preferably 5 to 30 µm. Such a thickness can ensure a relatively large three-phase interface composed of an ion-conductive phase (e.g., the separator), an electron-conductive phase (LNFCu), and a gaseous phase (air) without an increase in the gas diffusion resistance, and can more preferably reduce the reaction resistance of the air electrode or water electrolysis anode.

The air electrode or water electrolysis anode may be provided with a positive-electrode current collector on the outer surface. In such a case, the positive-electrode current collector preferably has gas permeability such that air is fed to the air electrode or water electrolysis anode or that oxygen is released. Preferred examples of the positive-electrode current collector are plates or meshes of metals, such as stainless steel, copper, and nickel; carbon paper; carbon cloth; and electron-conductive oxides. Particularly preferred is stainless steel mesh in view of corrosion resistance and gas permeability.

The air electrode may be further provided with a hydroxide-ion conductive separator on one side thereof. That is, one preferred embodiment of the present invention provides a separator-equipped air electrode comprising an air electrode and a hydroxide-ion conductive separator disposed on one side of the air electrode. The separator may be made of any material that permeates hydroxide ions and substantially blocks undesirable materials other than the hydroxide ions. The material may be, for example, a porous material (e.g., ceramic porous material or polymer porous membrane), a solid electrolyte (e.g., hydroxide-ion-conductive inorganic solid electrolyte such as LDH), or an anion exchange membrane and may be an organic material or an inorganic material. The hydroxide-ion conductive separator preferably contains a hydroxide-ion-conductive inorganic solid electrolyte and is more preferably composed of such an inorganic solid electrolyte. The hydroxide-ion-conductive inorganic solid electrolyte is preferably a dense ceramic material that can selectively permeate hydroxide ions generated at the air electrode to the electrolytic solution. In a metal-air battery, such a separator inhibits contamination of the inside of the battery with undesirable materials, such as carbon dioxide contained in the air, and also inhibits the migration of alkali metal ions in the electrolytic solution to the air electrode. Accordingly, the separator desirably does not permeate carbon dioxide. That is, the use of a separator composed of the hydroxide-ion-conductive inorganic solid electrolyte being a dense ceramic material can prevent contamination of the electrolytic solution with carbon dioxide because of the high density of the separator, leading to prevention of the degradation of the electrolytic solution by generation of carbonate ions to prevent a reduction in battery performance. The separator having high density and hardness can also prevent the short circuit between the positive and negative electrodes caused by dendritic zinc during a charge mode of a zinc-air secondary battery. Consequently, the resulting metal-air battery (in particular, metal-air secondary battery) barely undergoes characteristic deterioration and thus has high reliability. Thus, the separator is preferably composed of a hydroxide-ion-conductive inorganic solid electrolyte being a dense ceramic material. In particular, a separator composed of a dense and hard inorganic solid electrolyte can prevent short circuit between the positive and negative electrodes caused by dendritic metal (e.g., dendritic zinc) and also can prevent contamination with carbon dioxide.

The water electrolysis anode may be further provided with a hydroxide-ion conductive solid electrolyte on one side thereof. That is, a preferred embodiment of the present invention provides a solid electrolyte-equipped water electrolysis anode comprising a water electrolysis anode and a hydroxide-ion conductive solid electrolyte disposed on one side of the water electrolysis anode. The solid electrolyte-equipped water electrolysis anode is advantageous in that a water electrolysis apparatus can have a basic structure only by disposing a cathode because the solid electrolyte has been already provided. The hydroxide-ion solid electrolyte separates the anode from the cathode and inhibits contamination of hydrogen generated at the cathode with oxygen generated at the water electrolysis anode in the water electrolysis apparatus to improve the manufacturing efficiency of hydrogen. That is, the hydroxide-ion solid electrolyte can function as a separator. In this case, the hydroxide-ion-conductive inorganic solid electrolyte is preferably a dense ceramic material that can selectively permeate hydroxide ions generated at the cathode to the water electrolysis anode.

The hydroxide-ion-conductive inorganic solid electrolyte has a relative density of preferably 88% or more, more preferably 90% or more, still more preferably 94% or more, as determined by the Archimedes method. The density may be any value so long as the inorganic solid electrolyte can prevent the intrusion of an undesired substance contained in air (e.g., carbon dioxide) into the battery and the penetration of dendritic zinc. The hydroxide-ion-conductive inorganic solid electrolyte is preferably a layered double hydroxide (LDH) having a fundamental composition represented by the formula: M²⁺₁₋ₓM³⁺ₓ(OH)₂Aⁿ⁻_{x/n}·mH₂O (where M²⁺ represents at least one divalent cation, M³⁺ represents at least one trivalent cation, Aⁿ⁻ represents an n-valent anion, n is an integer of 1 or more, and x is 0.1 to 0.4). More preferably, M²⁺ comprises Mg²⁺, M³⁺ comprises Al³⁺, and Aⁿ⁻ comprises CO₃²⁻. Such a layered double hydroxide is preferably densified by a hydrothermal process. Thus, a green compact which has not undergone the hydrothermal process is not suitable as the separator or solid electrolyte used in the present invention because the compact is not dense and is brittle in the solution. Also, a coating membrane formed through application of a dispersion containing the layered double hydroxide is not suitable as the separator or solid electrolyte used in the present invention because of low density of the membrane. Any solidification process other than hydrothermal process may be used for producing a dense and hard hydroxide-ion-conductive solid electrolyte. As describe above, the separator 11 is preferably composed of a dense layered double hydroxide. A preferred dense layered double hydroxide and a process for preparation of the layered double hydroxide will be described below.

In another preferred embodiment of the present invention, the hydroxide-ion-conductive inorganic solid electrolyte may have at least one fundamental composition selected from the group consisting of hydrates of NaCo₂O₄, LaFe₃Sr₃O₁₀, Bi₄Sr₁₄Fe₂₄O₅₆, NaLaTiO₄, RbLaNb₂O₇, and KLaNb₂O₇ and Sr₄Co_{1.6}Ti_{1.4}O₈(OH)₂·xH₂O. These inorganic solid electrolytes can be prepared through reduction and hydration of a dense sintered compact having the aforementioned fundamental composition.

The separator or solid electrolyte may be in any form; for example, in a dense plate or membrane form. In the case of the air electrode, the separator or solid electrolyte is preferably in the form of a plate in view of further effective prevention of the penetration of dendritic metal, the intrusion of carbon dioxide, and the migration of alkali metal ions to the air electrode. The separator is also preferably in the form of a membrane having a density enough to prevent the intrusion of carbon dioxide and the migration of alkali metal ions to the air electrode. The hydroxide-ion-conductive solid electrolyte in the form of a plate has a thickness of preferably 0.1 to 1 mm, more preferably 0.1 to 0.5 mm, still more preferably 0.1 to 0.2 mm. The hydroxide-ion-conductive solid electrolyte in the form of a membrane has a thickness of preferably 0.001 to 0.05 mm, more preferably 0.001 to 0.01 mm, still more preferably 0.001 to 0.005 mm. The hydroxide-ion-conductive solid electrolyte preferably has a high hydroxide ion conductivity. The solid electrolyte has a hydroxide ion conductivity of typically 1×10⁻⁴ to 1×10⁻¹ S/m (1×10⁻³ to 1 mS/cm), more typically 1.0×10⁻⁴ to 1.0×10⁻² S/m (1.0×10⁻³ to 1.0×10⁻¹ mS/cm).

In the case of the air electrode, the separator may be in the form of a composite body containing particles of an inorganic solid electrolyte having hydroxide ion conductivity and an auxiliary component that promotes the densification or hardening of the particles. Alternatively, the separator may be in the form of a composite body containing a porous body serving as a substrate and an inorganic solid electrolyte (e.g., a layered double hydroxide) that is precipitated and grown in pores of the porous body. Examples of the materials of the porous body include ceramic materials, such as alumina and zirconia.

in the case of the air electrode, a porous substrate may be disposed on either or both of the surfaces of the separator 11 for reliable retention of hydroxide ions on the separator. In this case, it is considered to adopt a process including preparation of the porous substrate and formation of a membrane of the inorganic solid electrolyte on the porous substrate. The porous substrate may be composed of a layered double hydroxide or a polymer having hydroxide ion conductivity.

### Metal-air battery

The air electrode of the present invention can be used for the preparation of a metal-air battery, in particular, a metal-air secondary battery. The metal-air battery may include the air electrode of the present invention (or the separator-equipped air electrode), a metal negative electrode, and an electrolytic solution, wherein the electrolytic solution is separated from the air electrode layer 12 by the separator 11 of the air electrode. The metal-air battery preferably includes a hydroxide-ion conductive separator, an air electrode serving as a positive electrode in close contact with one side of the separator, a metal negative electrode disposed adjacent to the other side of the separator, and an electrolytic solution contained between the air electrode layer and a negative electrode with the separator therebetween. Accordingly, the separator of a separator-equipped air electrode preferably separates the air electrode from the electrolytic solution. The metal negative electrode may be composed of any known metal, such as zinc, lithium, aluminum, or magnesium, or an alloy of such a metal. The electrolytic solution may be appropriately selected from solutions having known compositions suitable for the negative electrode. In the case of a zinc-air battery, the electrolytic solution may be an aqueous alkali metal hydroxide solution, such as an aqueous potassium hydroxide solution or an aqueous sodium hydroxide solution. The metal negative electrode may be in direct contact with the electrolytic solution. Alternatively, the metal negative electrode may be in indirect contact with the electrolytic solution such that cations (e.g., lithium ions) are conducted through a separator which allows selective permeation of the cations and does not allow permeation of the electrolytic solution, hydroxide ions and the like. Preferred examples of such a metal-air secondary battery include the zinc-air secondary battery and the lithium-air secondary battery disclosed in Patent Documents 1 and 2.

### Water electrolysis apparatus

A water electrolysis apparatus can be produced with the water electrolysis anode according to the present invention. The water electrolysis apparatus preferably includes a hydroxide-ion conductive solid electrolyte and/or a hydroxide-ion conductive electrolytic solution. Such a water electrolysis apparatus preferably includes a water electrolysis anode, a cathode, and a hydroxide-ion conductive solid electrolyte and/or a hydroxide-ion conductive electrolytic solution. The water electrolysis apparatus most preferably includes a hydroxide-ion conductive solid electrolyte, and exhibits the advantages as described above. The hydroxide-ion conductive solid electrolyte and/or hydroxide-ion conductive electrolytic solution at least intervenes between the water electrolysis anode and the cathode. The water electrolysis anode corresponds to an oxygen-generating electrode, and the cathode corresponds to a hydrogen-generating electrode. The cathode may be made of a known material, such as nickel-plated iron or a nickel alloy. The hydroxide-ion conductive electrolytic solution may be an alkaline electrolytic solution, such as a potassium hydroxide aqueous solution, and the hydroxide-ion conductive solid electrolyte may be a material that is the same as or similar to the hydroxide-ion conductive material or hydroxide-ion conductive solid electrolyte described above, without any limitation. In the water electrolysis apparatus of the present invention, during electrolysis, OH⁻ is oxidized at the water electrolysis anode to generate O₂, whereas H₂O is reduced at the cathode to generate H₂, as shown by the following reaction formulae.
Anode: 4OH⁻ → O₂ + 2H₂O + 4e⁻
Cathode: 4H₂O + 4e⁻ → 2H₂ + 4OH⁻

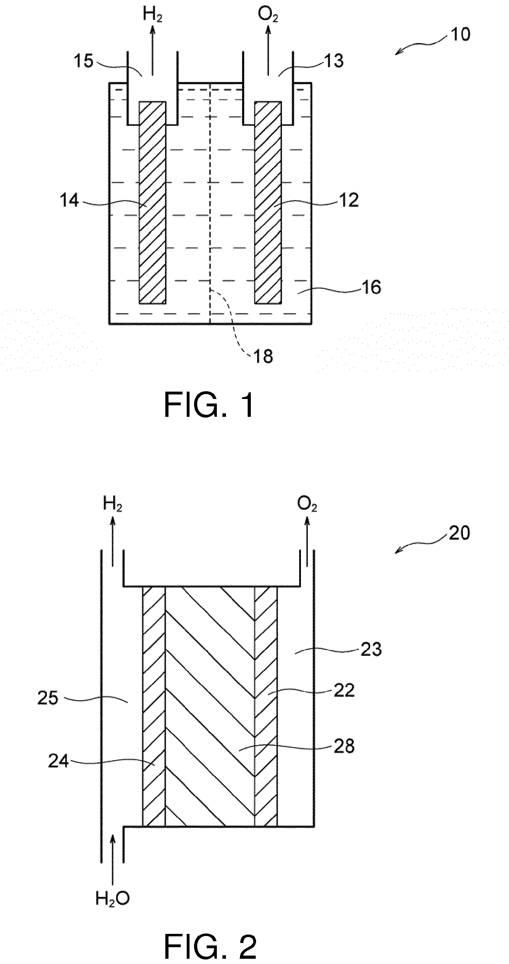

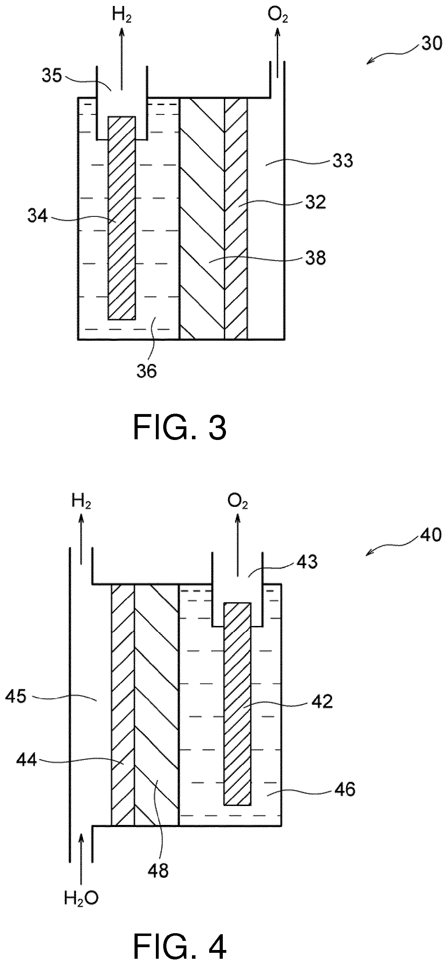

With the electrolyte, a hydroxide-ion conductive electrolytic solution 16 may be used alone as shown in Fig. 1; a hydroxide-ion conductive solid electrolyte 28 may be used alone as shown in Fig. 2; or both a hydroxide-ion conductive electrolytic solution 36, 46 and a hydroxide-ion conductive solid electrolyte 38, 48 may be used as shown in Figs. 3 and 4. In the water electrolysis apparatus 10 shown in Fig. 1, both a water electrolysis anode 12 and a cathode 14 are immersed in a hydroxide-ion conductive electrolytic solution 16 in a container, and the water electrolysis anode 12 and the cathode 14 are separated by a separator (e.g., asbestos fabric) from each other. In this case, the hydroxide-ion conductive electrolytic solution 16 feeds water to the cathode 14. In the water electrolysis apparatus 20 shown in Fig. 2, a water electrolysis anode 22 and a cathode 24 are disposed so as to face each other in a container, and a hydroxide-ion conductive solid electrolyte 28 intervenes therebetween. In this case, the hydroxide-ion conductive solid electrolyte 28 functions not only as an electrolyte but also as a separator. Since no electrolytic solution is included, water is fed to the cathode 24 through a cathode side channel 25. In the water electrolysis apparatus 30 shown in Fig. 3, a cathode 34 is filled with a hydroxide-ion conductive electrolytic solution 36, and a hydroxide-ion conductive solid electrolyte 38 is disposed on the surface of the water electrolysis anode 32 facing the cathode 34 to separate the water electrolysis anode 32 from the hydroxide-ion conductive electrolytic solution 36. In this case, the hydroxide-ion conductive solid electrolyte 38 functions not only as an electrolyte but also as a separator, and the hydroxide-ion conductive electrolytic solution 36 feeds water to the cathode 34. In the water electrolysis apparatus 40 shown in Fig. 4, a water electrolysis anode 42 is filled with a hydroxide-ion conductive electrolytic solution 46, and a hydroxide-ion conductive solid electrolyte 48 is disposed on the surface of a cathode 44 facing the water electrolysis anode 42 to separate the cathode 44 from the hydroxide-ion conductive electrolytic solution 46. In this case, the hydroxide-ion conductive solid electrolyte 48 functions not only as an electrolyte but also as a separator. Since the cathode 44 is not in contact with the hydroxide-ion conductive electrolytic solution 36, water is fed to the cathode 44 through the cathode side channel 45. In the water electrolysis apparatuses 10, 20, 30, and 40, the water electrolysis anodes 12, 22, 32, and 42 are respectively connected to the anode-side channels 13, 23, 33, and 43 that can discharge oxygen gas generated by water electrolysis, and the cathodes 14, 24, 34, and 44 are respectively connected to the cathode-side channels 15, 25, 35, and 45 that can discharge hydrogen gas generated by water hydrolysis.

Among these water electrolysis apparatuses of various embodiments, preferred are the water electrolysis apparatuses 20, 30, and 40 including hydroxide-ion conductive solid electrolytes 28, 38, and 48 as shown in Figs. 2 to 4; and most preferred is the water electrolysis apparatus having a structure including the hydroxide-ion conductive solid electrolyte 28 alone as shown in Fig. 2. In comparison with the water electrolysis apparatus including a hydroxide-ion conductive electrolytic solution, the water electrolysis apparatus including a hydroxide-ion conductive solid electrolyte has the following advantages: 1) Pure water is fed instead of a corrosive alkaline aqueous solution facilitates the maintenance of the apparatus; 2) The dense solid electrolyte simplifies the control of differential pressure between electrodes (a liquid electrolyte requires strict control of the differential pressure between electrodes for preventing the generated H₂ and O₂ gases from permeating through the electrolytes and being mixed with each other); and 3) The current density can be increased to enhance the performance of the apparatus (if the electrolyte is a liquid, an increase in current density allows H₂ and O₂ gas bubbles to remain in the electrolytic solution to reduce the ion conductivity of the electrolytic solution, resulting in an increase in resistance). The advantages 1) to 3) correspond not only to the case of using a hydroxide-ion conductive solid electrolyte but also to the case of using a proton conductive solid electrolyte, however, the case of using a hydroxide-ion conductive solid electrolyte, unlike the case of using a proton conductive solid electrolyte, also has a further advantage: 4) A non-noble metal material can be used for an electrode to reduce the cost (in the case of using a proton conductive solid electrolyte, a noble metal is used for an electrode, leading to an increase in raw material cost).

### Dense Layered Double Hydroxide and Preparation Thereof

As described above, the hydroxide-ion-conductive solid electrolyte usable as the separator of the air electrode of the present invention is preferably a dense layered double hydroxide. A preferred dense layered double hydroxide preferably comprises, as a main phase, a layered double hydroxide represented by the formula: M2⁺₁₋ₓM³⁺ₓ(OH)₂Aⁿ⁻_{x/n}·mH₂O (where M²⁺ represents at least one divalent cation, M³⁺ represents at least one trivalent cation, Aⁿ⁻ represents an n-valent anion, n is an integer of 1 or more, x is 0.1 to 0.4, and m is 0 or more). The dense layered double hydroxide preferably consists essentially of (or consists of) the aforementioned layered double hydroxide.

In the formula, M²⁺ may represent any divalent cation, and is preferably Mg²⁺, Ca²⁺, or Zn²⁺, more preferably Mg²⁺. M³⁺ may represent any trivalent cation, and is preferably Al³⁺ or Cr³⁺, more preferably Al³⁺. Aⁿ⁻ may represent any anion, and is preferably OH⁻ or CO₃²⁻. In the formula, preferably, at least M²⁺ comprises Mg²⁺, M³⁺ comprises Al³⁺, and Aⁿ⁻ comprises OH⁻ and/or CO₃²⁻. In the formula, n is an integer of 1 or more, preferably 1 or 2; x is 0.1 to 0.4, preferably 0.2 to 0.35; and m is 0 or more, typically a real or integer number exceeding 0 or not less than 1.

As described above, the dense layered double hydroxide has a relative density of preferably 88% or more, more preferably 90% or more, still more preferably 94% or more. Thus, the dense layered double hydroxide preferably contains substantially no cracks, more preferably absolutely no cracks.

In the dense layered double hydroxide, the main phase of the layered double hydroxide is preferably composed of layered double hydroxide particles exhibiting no clear endothermic peak at 300°C or lower by differential thermal analysis, for the following reasons. A clear endothermic peak observed at around 200°C by differential thermal analysis is probably attributed to the removal of interlayer water, and the removal of interlayer water may lead to a significant structural change, such as a rapid change in interlayer distance, resulting in a narrow temperature range within which the structure is stable.

The layered double hydroxide dense body may be prepared by any method, and one preferable embodiment of the production method is described below. This production method is performed by compacting and firing a raw material powder of a layered double hydroxide represented by hydrotalcite to obtain an oxide fired body, allowing the oxide fired body to reproduce the layered double hydroxide, and then removing excessive water. According to this method, a high-grade layered double hydroxide dense body having a relative density of 88% or greater can be provided and produced in a simple and stable manner.

### (1) Provision of raw material powder

A powder of a layered double hydroxide represented by general formula: M²⁺₁₋ₓM³⁺ₓ(OH)₂Aⁿ⁻_{x/n}·mH₂O (wherein M²⁺ is a divalent cation, M³⁺ is a trivalent cation, Aⁿ⁻ is an anion having a valency of n, n is an integer of 1 or greater, x is 0.1 to 0.4, and m is 0 or more) is provided as a raw material powder. In the general formula above, M²⁺ may be any divalent cation, and preferable examples include Mg²⁺, Ca²⁺, and Zn²⁺, with Mg²⁺ being more preferable. M³⁺ may be any trivalent cation, and preferable examples include Al³⁺ and Cr³⁺, with Al³⁺ being more preferable. Aⁿ⁻ may be any anion, and preferable examples include OH⁻ and CO₃²⁻. Accordingly, it is preferable that in the general formula above, at least M²⁺ comprises Mg²⁺, M³⁺ comprises Al³⁺, and Aⁿ⁻ comprises OH⁻ and/or CO₃²⁻. The value of n is an integer of 1 or greater and is preferably 1 or 2. The value of x is 0.1 to 0.4 and is preferably 0.2 to 0.35; and m is 0 or more, typically a real or integer number exceeding 0 or not less than 1. Such a raw material powder may be a commercially available layered double hydroxide product or may be a raw material prepared by a known method such as liquid phase synthesis technique using nitrate or chloride. The particle size of the raw material powder is not limited as long as the desired layered double hydroxide dense body can be obtained, and the volume-based D50 average particle diameter is preferably 0.1 to 1.0 µm and more preferably 0.3 to 0.8 µm. This is because an excessively small particle diameter of the raw material powder is likely to result in aggregation of the powder, and it is highly possible that pores remain during compaction, while an excessively large particle diameter results in poor compactability.

Optionally, the raw material powder may be calcined to obtain an oxide powder. Although the calcination temperature at this stage is slightly different depending on the constituting M²⁺ and M³⁺, the calcination temperature is preferably 500°C or less and more preferably 380 to 460°C, and calcination is performed in such a range that the particle diameter of the raw material does not largely change.

### (2) Preparation of compact

The raw material powder is compacted to obtain a compact. It is preferable that this compaction is performed by, for example, pressing such that the compact after compaction and before firing (hereinafter referred to as a compact) has a relative density of 43 to 65%, more preferably 45 to 60%, and even more preferably 47% to 58%. The relative density of the compact can be determined by calculating the density from the size and weight of the compact and dividing the density by the theoretical density, but since the weight of a compact is affected by adsorbed water, it is preferable to measure the relative density of a compact made from a raw material powder that has been stored for 24 hours or longer in a desiccator at room temperature at a relative humidity of 20% or less, or measure the relative density after storing the compact under the foregoing conditions, in order to obtain a precise value. When a raw material powder that has been calcined to form an oxide powder is used, the relative density of the compact is preferably 26 to 40% and more preferably 29 to 36%. In the case of using the oxide powder, the relative density was determined by using a calculated density obtained in terms of a mixture of oxides as a denominator, assuming that the metal elements constituting the layered double hydroxide had changed to their respective oxides due to calcination. Pressing, which is cited as an example, may be performed by metal-mold uniaxial pressing or may be performed by cold isostatic pressing (CIP). In the case of cold isostatic pressing (CIP), it is preferable to use a raw material powder that has been placed in a rubber container and vacuum-sealed or that has preliminarily compacted. In addition, the raw material powder may be compacted by a known method such as slip casting or extrusion molding, and the compacting method is not particularly limited. When a raw material powder that has been calcined to form an oxide powder is used, the compacting method is limited to dry compaction. The relative density of a compact from these methods influences not only the strength of the resulting dense body but also the degree of orientation of layered double hydroxide particles that usually have a plate shape, and it is therefore preferable to suitably adjust the relative density within the aforementioned range at the stage of compaction in consideration of, for example, the application thereof.

### (3) Firing step

The compact produced in the foregoing step is fired to give an oxide fired body. It is preferable that this firing is performed such that the oxide fired body has a weight that is 57 to 65% of the weight of the compact and/or a volume that is 70 to 76% of the volume of the compact. When the weight is no less than 57% of the weight of the compact, a heterogeneous phase, from which a layered double hydroxide cannot be reproduced, is unlikely to be produced at the stage of reproduction of the layered double hydroxide, which is a subsequent step, and when the weight is no greater than 65%, firing is sufficient, and sufficient densification is achieved in a subsequent step. Also, when the volume is no less than 70% of the volume of the compact, neither a heterogeneous phase nor cracks are likely to appear at the stage of reproducing a layered double hydroxide, which is a subsequent step, and when the volume is no greater than 76%, firing is sufficient, and sufficient densification is achieved in a subsequent step. When the raw material powder that has been calcined to form an oxide powder is used, it is preferable to give an oxide fired body having a weight that is 85 to 95% of the weight of the compact and/or a volume that is no less than 90% of the volume of the compact. Irrespective of whether the raw material powder is calcined or not, it is preferred that firing is performed such that the oxide fired body has a relative density of 20 to 40% in terms of oxide, more preferably 20 to 35%, and even more preferably 20 to 30%. The relative density in terms of oxide is determined by using a calculated density obtained in terms of a mixture of oxides as a denominator, assuming that the metal elements constituting the layered double hydroxide have changed to their respective oxides due to firing. A preferable firing temperature for obtaining an oxide fired body is 400 to 850°C, and more preferably 700 to 800°C. It is preferable that the compact is retained at a firing temperature within this range for 1 hour or longer, and a more preferable retention time is 3 to 10 hours. In order to prevent the compact from cracking due to the release of water and carbon dioxide caused by rapid temperature increase, it is preferable to increase the temperature to the aforementioned firing temperature at a rate of 100°C/h or less, more preferably 5 to 75°C/h, and even more preferably 10 to 50°C/h. Accordingly, it is preferable to secure an overall firing time from temperature increase to temperature decrease (100°C or less) of 20 hours or longer, more preferably 30 to 70 hours, and even more preferably 35 to 65 hours.

### (4) Reproduction step for reproducing layered double hydroxide

The oxide fired body prepared in the foregoing step is retained in or immediately above an aqueous solution comprising the above-described anion having a valency of n (Aⁿ⁻) to reproduce a layered double hydroxide, thereby providing a water-rich layered double hydroxide solidified body. That is, the layered double hydroxide solidified body prepared by this production method inevitably contains excessive water. The anion contained in the aqueous solution may be the same anion as the anion contained in the raw material powder or may be a different anion. The retention of the oxide fired body in or immediately above the aqueous solution is preferably performed by a procedure of hydrothermal synthesis in a closed vessel, and an example of such a closed vessel is a closed vessel made from Teflon (registered trademark), more preferably a closed vessel equipped with a jacket made from stainless steel or the like. It is preferable that the formation of a layered double hydroxide is performed by retaining the oxide fired body at a temperature of 20°C or greater and less than 200°C in a state in which at least one surface of the oxide fired body is in contact with the aqueous solution, a more preferable temperature is 50 to 180°C, and an even more preferable temperature is 100 to 150°C. The oxide sintered body is retained at such a layered double hydroxide formation temperature preferably for 1 hour or longer, more preferably for 2 to 50 hours, and even more preferably for 5 to 20 hours. Such a retention time makes it possible to promote sufficient reproduction of a layered double hydroxide and avoid or reduce a remaining heterogeneous phase. An excessively long retention time does not result in any particular problem, and the retention time is suitably set in view of efficiency.

When carbon dioxide (carbonate ions) in air is intended to be used as the anionic species of the aqueous solution comprising an anion having a valency of n used for the reproduction of a layered double hydroxide, it is possible to use ion exchanged water. When performing hydrothermal treatment in a closed vessel, the oxide fired body may be immersed in the aqueous solution, or treatment may be performed in such a state that at least one surface is in contact with the aqueous solution by using a jig. In the case where treatment is performed in a state in which at least one surface is in contact with the aqueous solution, the amount of excessive water is smaller than the amount required for complete immersion, and therefore the subsequent step may be performed in a shorter period of time. However, an excessively small amount of the aqueous solution is likely to result in cracks, and it is preferable to use water in an amount greater than or equal to the weight of the fired body.

### (5) Dehydration step

Excessive water is removed from the water-rich layered double hydroxide solidified body prepared in the foregoing step. In this way, the layered double hydroxide dense body of the present invention is prepared. It is preferable that this step of removing excessive water is performed in an environment having a temperature of 300°C or less and an estimated relative humidity at the maximum temperature in the removal step of 25% or greater. In order to prevent rapid evaporation of water from the layered double hydroxide solidified body, it is preferable to charge the solidified body again into the closed vessel used in the reproduction step for reproducing the layered double hydroxide and remove water, in the case of dehydration at a temperature higher than room temperature. A preferable temperature in this case is 50 to 250°C and more preferably 100 to 200°C. A more preferable relative humidity at the stage of dehydration is 25 to 70% and even more preferably 40 to 60%. Dehydration may be performed at room temperature, and there is no problem as long as the relative humidity in this case is within the range of 40 to 70% in an ordinary indoor environment.

### EXAMPLES

The present invention will now be described in more detail by way of Examples.

### Examples 1 to 8

Eight separator-equipped air electrodes were produced according to the conditions shown in Table 1 and were evaluated as follows.

### (1) Production of electron-conductive material (LNFCu)

An electron-conductive material (LNFCu) was produced as follows. Lanthanum hydroxide, nickel oxide, copper oxide, and iron oxide powders were dried at 110°C for 12 hours. The dried powders were weighed in a molar ratio to give the formula LaNi_{1-x-y}CuₓFe_{y}O_{3-δ} where x was 0.01 and y was 0.01 as shown in Table 1. These powders were wet-mixed with an aqueous medium, followed by drying. The mixture was then sieved to prepare a powder mixture. The powder mixture was put into an alumina crucible with lid and was then heat-treated in an oxygen atmosphere at a calcination temperature of 1100°C for 12 hours for a sold phase reaction to give a calcined powder of a perovskite phase. XRD analysis of the calcined powder showed a single perovskite phase. The calcined powder was pulverized and uniaxially pressed and was then cold isostatic pressed (CIP) to give a compact. The resulting compact was left to stand in an alumina sheath with lid and was then heat-treated in an oxygen atmosphere at a firing temperature of 1100°C for 12 hours to give a sintered compact. The resulting sintered compact was wet-pulverized with a pot mill to give a powder of the LNFCu.

### (2) Production of hydroxide-ion conductive material (Examples 5 to 8 only)

In Examples 5 to 8, a particulate layered double hydroxide (hereinafter referred to as "particulate LDH") serving as a hydroxide-ion-conductive material was prepared as follows: Ni(NO₃)₂·6H₂O and Fe(NO₃)₃·9H₂O (molar ratio of Ni:Fe = 3:1) were dissolved in deionized water to prepare a mixture. The mixture was added dropwise to a 0.3M Na₂CO₃ solution at 70°C with agitation. The pH of the mixture was adjusted to 10 by addition of a 2M NaOH solution, and the mixture was maintained at 70°C for 24 hours. The precipitate produced in the mixture was filtered, washed with distilled water, and then dried at 80°C, to prepare particulate LDH.

### (3) Production of air electrode layer

In Examples 1 to 4, a predetermined amount of the LNFCu powder prepared above was weighed. In Examples 5 to 8, the LNFCu powder prepared above and LDH particles were each weighed at a mixing ratio of 50 vol% and were wet-mixed in the presence of an ethanol solvent. The resulting mixture was dried at 70°C and was then cracked. The thus-prepared LNFCu-containing powders in Examples 1 to 8 were each mixed with a binder (PTFE) and water for fibrillation. The resulting fibrillated mixture was press-bonded to a current collector (carbon cloth, manufactured by ElectroChem, Inc., Product No.: EC-CC1-060T) to form an air electrode layer/current collector laminated sheet where the air electrode layer was the fibrillated mixture in a sheet form having a thickness of 100 µm.

### (4) Preparation of separator

As shown in Table 1, various separators were prepared in Examples 1 to 8. The details of the prepared separators are as follows.

### (LDH separator: Examples 1 and 5)

In Examples 1 and 5, the separator used was an LDH separator. The LDH separator was produced as follows. Powdery hydrotalcite (DHT-6, manufactured by Kyowa Chemical Industry Co., Ltd.); i.e., a commercially available layered double hydroxide, was used as a powdery raw material. The powdery raw material had a composition of Mg²⁺_{0.75}Al³⁺_{0.25}(OH)₂(OH)₂CO₃²⁻_{0.25/n}·mH₂O. A mold having a diameter of 16 mm was filled with the powdery raw material, and the raw material was subjected to uniaxial pressing at a pressure of 500 kgf/cm², to form a compact having a relative density of 55% and a thickness of 2 mm. The relative density was measured after storage of the compact at room temperature and a relative humidity of 20% or less for 24 hours. The compact was fired in an alumina sheath. In order to prevent breakage of the compact through release of moisture and carbon dioxide by rapid heating, the compact was fired by a process involving heating of the compact at a rate of 100°C/h or less, maintenance of the compact at a maximum temperature of 750°C for five hours, and then cooling of the compact. The total time of the firing process involving the heating, the maintenance, and the cooling (to 100°C or lower) was 62 hours. The resultant fired product and deionized water were placed in air in a Teflon (registered trademark) hermetic container provided with an external stainless steel jacket, followed by a hydrothermal treatment process at 100°C for five hours, to prepare a sample. The sample was cooled to room temperature, and excess water on the surface of the sample was gently wiped off with a paper filter. The resultant sample was dried in a chamber at 25°C and a relative humidity of about 50% and then polished, to prepare a platy separator sample having a thickness of 0.5 mm.

The density of the separator sample was calculated from its dimensions and weight, and the calculated density was divided by the theoretical density of the sample to determine the relative density of the sample. The theoretical density was calculated on the basis of the theoretical density (2.06 g/cm³) of hydrotalcite (Mg/Al = 3) described in JCPDS card No. 22-0700. The separator had a relative density of 95%. The crystalline phase of the separator sample was analyzed with an X-ray diffractometer (D8 ADVANCE, manufactured by Bulker AXS) at a voltage of 40 kV, a current of 40 mA, and a measuring range of 5 to 70°, and the sample was identified on the basis of the diffraction peaks of hydrotalcite described in JCPDS card No. 35-0965. Only the peaks derived from the hydrotalcite were observed.

### (Anion exchange membrane: Examples 2 and 6)

In Examples 2 and 6, the separator used was a commercially available anion exchange membrane (product name: Neosepta (Product No.: AHA), manufactured by Astom Corporation).

### (Ceramic porous material: Examples 3 and 7)

In Examples 3 and 7, the separator used was a ceramic porous material. The ceramic porous material was produced as follows. Boehmite (manufactured by Sasol, Ltd., DISPAL 18N4-80), methyl cellulose, and deionized water were weighed such that the mass ratio of (boehmite) : (methyl cellulose) : (deionized water) was 10:1:5 and were then kneaded. The resulting kneaded product was compacted into a plate shape by extrusion molding using a hand press. The resulting compact was dried at 80°C for 12 hours and was then fired at 1150°C for 3 hours to give an alumina ceramic porous material. The porosity of the surface of the resulting ceramic porous substrate measurement by a method involving image processing was 24.6%. This measurement of porosity was performed by 1) observing the surface micro-structure with a scanning electron microscope (SEM, JSM-6610LV, manufactured by JEOL Ltd.) at an acceleration voltage of 10 to 20 kV and acquiring a scanning electron microscope (SEM) image (magnification: 10000 times or more) of the porous substrate surface; 2) loading the grey-scale SEM image with image analysis software, such as Photoshop (manufactured by Adobe); 3) forming a monochromic binary image by a procedure [image] → [tone correction] → [black and white conversion]; and 4) determining the porosity (%) as the value determined by dividing the number of pixels accounting for the black area by the total number of the pixels of the image. This measurement of porosity was performed for an area of 6 × 6 µm in the surface of a ceramic porous material. The average pore size of the ceramic porous material measured was about 0.1 µm. In the present invention, the average pore size was determined by measuring the maximum diameter of each pore in a scanning electron microscope (SEM) image of the surface of the porous substrate. The magnification of the SEM image used in this measurement was 20000. All of the resulting pore diameters were sorted by size, and 15 diameters superior to the median and 15 diameters inferior to the median, 30 diameters in total, were used as the pore diameters in one view. The average pore diameter was determined using the pore diameters in two views. The maximum diameter was measured using the length-measuring function of SEM software.

### (Polymer porous membrane: Examples 4 and 8)

In Examples 4 and 8, the separator used was a commercially available polymer porous membrane (production name: CellGuard 2400, manufactured by Polypore International, Inc.).

### (5) Production and evaluation of air electrode

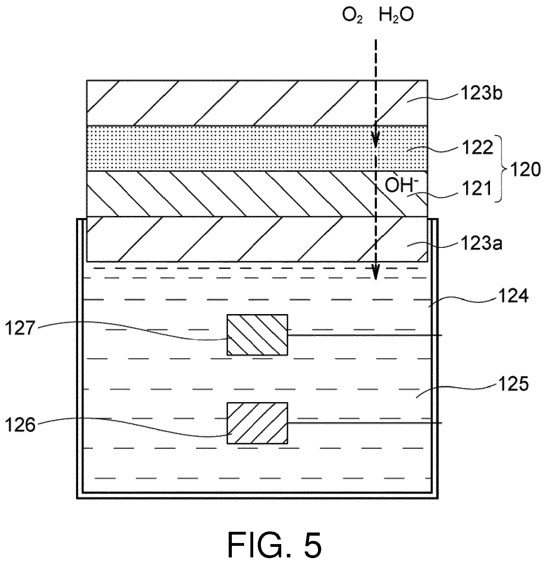

The air electrode layer/current collector laminated sheet produced above was press-bonded to the separator prepared as above such that the air electrode layer is in contact with the separator sample to prepare a separator-equipped air electrode sample. In order to examine the potential drop characteristics of an air battery including the resulting separator-equipped air electrode, an electrochemical measurement system for measuring potential drop was produced as shown in Fig. 5. Porous nickel current collector plates 123a and123b were press-bonded respectively to the top and bottom of the separator-equipped air electrode 120 (i.e., the layered product of the separator 121 and the air electrode layer 122). The container 124 was filled with a 1M KOH solution serving as the electrolytic solution 125. A Pt black electrode 126 (manufactured by InterChem Ltd.) serving as a counter electrode and a reversible hydrogen electrode (RHE) 127 (manufactured by InterChem Ltd.) serving as a reference electrode were arranged in the solution. The current collector plate 123a/separator-equipped air electrode 120/current collector plate 123b layered product was fit into the container 124 from the top such that the electrolytic solution 125 passes through the current collector plate 123a and then comes into contact with the separator 121. A current having a current density of 100 mA/cm² was made to flow from the Pt black electrode 126 toward the upper current collector plate 123b, and the potential drop between the reversible hydrogen electrode (RHE) 127 and the upper current collector plate 123b was measured with a potentio-galvanostat (manufactured by Solartron ISA, Model No. 1287). Separately, the resistances of the separator 121 and KOH were measured, and the potential drop due to the resistances was subtracted from the measured potential drop to calculate the potential drop due to the air electrode layer 122 (the potential drop in the discharge reaction of the metal-air battery). Subsequently, the direction of the current was reversed, and the potential drop due to the air electrode in the charge reaction was similarly measured. The resulting potential drop was evaluated in four grades based on the following criteria.

### <Evaluation of potential drop by air electrode layer at 100 mA/cm²>

A: a potential drop of less than 1.0 V,
B: a potential drop of 1.0 V or more and less than 1.5 V,
C: a potential drop of 1.5 V or more and less than 2.0 V, and
D: a potential drop of 2.0 V or more.

### Examples 9 to 16

Air electrodes and separators were produced and evaluated as in Examples 1 to 8 except that lanthanum hydroxide, nickel oxide, copper oxide, and iron oxide powders were weighed in a molar ratio to give the formula LaNi_{1-x-y}CuₓFe_{y}O_{3-δ} where x was 0.20 and y was 0.05, as shown in Table 1. The results are shown in Table 1.

### Examples 17 to 24

Air electrodes and separators were produced and evaluated as in Examples 1 to 8 except that lanthanum hydroxide, nickel oxide, copper oxide, and iron oxide powders were weighed in a molar ratio to give the formula LaNi_{1-x-y}CuₓFe_{y}O_{3-δ} where x was 0.25 and y was 0.25, as shown in Table 1. The results are shown in Table 1.

[Table 1] (Examples 1-4, 9-12, and 17-20 are not according to the invention)

**Table 1**

| | Component of air electrode | | Separator | Evaluation of potential drop by air electrode layer at 100 mA/cm²** | |
|---|---|---|---|---|---|
| | Electron-conductive material | Hydroxide-ion conductive material | | | |
| | | | | Discharge | Charge |
| Ex. 1 | La(Ni_{1-x-y}CuₓFe_{y})O₃ x=0.01,y=0.01 | None | LDH | B | B |
| Ex. 2 | | | Anion exchange membrane | B | B |
| Ex. 3 | | | Ceramic porous material | B | B |
| Ex. 4 | | | Polymer porous membrane | B | B |
| Ex. 5 | | LDH (50 vol%) | LDH | A | A |
| Ex. 6 | | | Anion exchange membrane | A | A |
| Ex. 7 | | | Ceramic porous material | A | A |
| Ex. 8 | | | Polymer porous membrane | A | A |
| Ex. 9 | La(Ni_{1-x-y}CuₓFe_{y})O₃ x=0.20,y=0.05 | None | LDH | B | B |
| Ex. 10 | | | Anion exchange membrane | B | B |
| Ex. 11 | | | Ceramic porous material | B | B |
| Ex. 12 | | | Polymer porous membrane | B | B |
| Ex. 13 | | LDH (50 vol%) | LDH | A | A |
| Ex. 14 | | | Anion exchange membrane | A | A |
| Ex. 15 | | | Ceramic porous material | A | A |
| Ex. 16 | | | Polymer porous membrane | A | A |
| Ex. 17 | La(Ni_{1-x-y}Cu_{xF}e_{y})O₃ x=0.25,y=0.25 | None | LDH | B | B |
| Ex. 18 | | | Anion exchange membrane | B | B |
| Ex. 19 | | | Ceramic porous material | B | B |
| Ex. 20 | | | Polymer porous membrane | B | B |
| Ex. 21 | | LDH (50 vol%) | LDH | A | A |
| Ex. 22 | | | Anion exchange membrane | A | A |
| Ex. 23 | | | Ceramic porous material | A | A |
| Ex. 24 | | | Polymer porous membrane | A | A |

| | | | | | |
|---|---|---|---|---|---|
| ** Evaluation of potential drop is as follows: A: a potential drop of less than 1.0 V, B: a potential drop of 1.0 V or more and less than 1.5 V, C: a potential drop of 1.5 V or more and less than 2.0 V, and D: a potential drop of 2.0 V or more. | | | | | |

### Examples 25 to 32 (Comparative Examples)

Air electrodes and separators were produced and evaluated as in Examples 1 to 8 except that LaNiO₃ was used as the electron conductive material instead of LaNi_{1-x-y}CuₓFe_{y}O_{3-δ}, as shown in Table 2. The results are shown in Table 2.

### Examples 33 to 40 (Comparative Examples)

Air electrodes and separators were produced and evaluated as in Examples 1 to 8 except that carbon black (manufactured by Denka Co., Ltd., Product No.: Denka Black (powder)) was used as the electron conductive material instead of LaNi_{1-x-y}CuₓFe_{y}O_{3-δ}, as shown in Table 2. The results are shown in Table 2.

[Table 2]

**Table 2**

| | Component of air electrode | | Separator | Evaluation of potential drop by air electrode layer at 100 mA/cm²** | |
|---|---|---|---|---|---|
| | Electron-conductive material | Hydroxide-ion conductive material | | | |
| | | | | Discharge | Charge |
| Ex. 25* | LaNiO₃ | None | LDH | D | D |
| Ex. 26* | | | Anion exchange membrane | D | D |
| Ex. 27* | | | Ceramic porous material | D | D |
| Ex. 28* | | | Polymer porous membrane | D | D |
| Ex. 29* | | LDH (50 vol%) | LDH | C | C |
| Ex. 30* | | | Anion exchange membrane | C | C |
| Ex. 31* | | | Ceramic porous material | C | C |
| Ex. 32* | | | Polymer porous membrane | C | C |
| Ex. 33* | Carbon black | None | LDH | D | D |
| Ex. 34* | | | Anion exchange membrane | D | D |
| Ex. 35* | | | Ceramic porous material | D | D |
| Ex. 36* | | | Polymer porous membrane | D | D |
| Ex. 37* | | LDH (50 vol%) | LDH | C | C |
| Ex. 38* | | | Anion exchange membrane | C | C |
| Ex. 39* | | | Ceramic porous material | C | C |
| Ex. 40* | | | Polymer porous membrane | C | C |

| | | | | | |
|---|---|---|---|---|---|
| * Comparative Example ** Evaluation of potential drop is as follows: A: a potential drop of less than 1.0 V, B: a potential drop of 1.0 V or more and less than 1.5 V, C: a potential drop of 1.5 V or more and less than 2.0 V, and D: a potential drop of 2.0 V or more. | | | | | |

As obvious from the results of evaluation in Examples 1 to 40, it is demonstrated that in air electrodes including the LNFCu of the present invention, the potential drop in the charge and discharge reactions is significantly small and that the catalytic activity is higher than that in carbon black. The LNFCu exhibiting high catalytic activity in an air electrode can also similarly exhibit high catalytic activity as a water electrolysis anode in a water electrolysis apparatus that electrolyzes water through the same reaction formulae. That is, the findings in Examples 1 to 40 are also similarly applied not only to the air electrode for a metal-air battery but also to the anode for a water electrolysis apparatus.

## Claims

1. An air electrode or water electrolysis anode for a metal-air battery or water electrolysis apparatus, comprising an electron-conductive material represented by LaNi_{1-x-y}CuₓFe_{y}O_{3-δ}, where x > 0, y > 0, x + y < 1, and 0 ≤ δ ≤ 0.4, **characterized in that** the electron conductive material further is an air electrode catalyst or a water electrolysis anode catalyst, wherein the air electrode or water electrolysis anode further comprises a hydroxide-ion conductive material, and wherein the air electrode or water electrolysis anode comprises the electron-conductive material in an amount of 15 to 70 vol.% based on the total amount of the electron-conductive material and the hydroxide-ion conductive material.

2. The air electrode or water electrolysis anode according to claim 1, wherein the subscript x satisfies x ≤ 0.5.

3. The air electrode or water electrolysis anode according to any one of claims 1 to 2, wherein the subscript x satisfies 0.01 ≤ x ≤ 0.5.

4. The air electrode or water electrolysis anode according to any one of claims 1 to 3, wherein the subscript y satisfies y ≤ 0.3.

5. The air electrode or water electrolysis anode according to any one of claims 1 to 4, wherein the subscript y satisfies 0.01 ≤ y ≤ 0.3.

6. The air electrode or water electrolysis anode according to any one of claims 1 to 5, wherein the electron-conductive material includes a perovskite crystal phase.

7. The air electrode or water electrolysis anode according to any one of claims 1 to 6, wherein the hydroxide-ion conductive material contains a layered double hydroxide having a fundamental composition represented by a formula: M²⁺₁₋ₓM³⁺ₓ(OH)₂Aⁿ⁻_{x/n}·mH₂O ,where M²⁺ represents at least one divalent cation, M³⁺ represents at least one trivalent cation, Aⁿ⁻ represents an n-valent anion, n is an integer of 1 or more, x is 0.1 to 0.4, and m is 0 or more.

8. The air electrode or water electrolysis anode according to claim 7, wherein M²⁺ includes Ni²⁺, M³⁺ includes Fe³⁺, and Aⁿ⁻ includes NO³⁻ and/or CO₃²⁻.

9. The air electrode or water electrolysis anode according to any one of claims 1 to 6, wherein the hydroxide-ion conductive material contains a polymer material having hydroxide-ion conductivity.

10. The water electrolysis anode according to any one of claims 1 to 9, wherein the water electrolysis apparatus includes a hydroxide-ion conductive solid electrolyte and/or a hydroxide-ion conductive electrolytic solution.

11. The water electrolysis anode according to any one of claims 1 to 10, wherein the water electrolysis apparatus includes a hydroxide-ion conductive solid electrolyte.

12. A separator-equipped air electrode comprising:
the air electrode according to any one of claims 1 to 9; and
a hydroxide-ion conductive separator disposed on one side of the air electrode.

13. A solid electrolyte-equipped water electrolysis anode comprising:
the water electrolysis anode according to any one of claims 1 to 9; and
a hydroxide-ion conductive solid electrolyte disposed on one side of the water electrolysis anode.

14. A metal-air battery comprising:
the air electrode according to any one of claims 1 to 9 or the separator-equipped air electrode according to claim 12;
a metal negative electrode; and
an electrolytic solution.

15. A water electrolysis apparatus comprising:
the water electrolysis anode according to any one of claims 1 to 11;
a cathode; and
a hydroxide-ion conductive solid electrolyte and/or a hydroxide-ion conductive electrolytic solution.

## Patentansprüche

1. Luftelektrode oder Wasserelektrolyseanode für eine Metall-Luft-Batterie oder Wasserelektrolysevorrichtung mit einem elektronenleitfähigen Material, das durch LaNi_{1-x-y}CuₓFe_{y}O_{3-δ} dargestellt ist, wobei x > 0, y > 0, x + y < 1 und 0 ≤ δ ≤ 0,4, **dadurch gekennzeichnet, dass** das elektronenleitfähige Material ferner ein Luftelektrodenkatalysator oder ein Wasserelektrolyseanodenkatalysator ist, wobei die Luftelektrode oder Wasserelektrolyseanode ferner ein hydroxidionenleitfähiges Material umfasst und wobei die Luftelektrode oder Wasserelektrolyseanode das elektronenleitfähige Material in einer Menge von 15 bis 70 Vol.-% auf der Basis der Gesamtmenge des elektronenleitfähigen Materials und des hydroxidionenleitfähigen Materials umfasst.

2. Luftelektrode oder Wasserelektrolyseanode nach Anspruch 1, wobei der tiefgestellte Index x x ≤ 0,5 erfüllt.

3. Luftelektrode oder Wasserelektrolyseanode nach einem der Ansprüche 1 bis 2, wobei der tiefgestellte Index x 0,01 ≤ x ≤ 0,5 erfüllt.

4. Luftelektrode oder Wasserelektrolyseanode nach einem der Ansprüche 1 bis 3, wobei der tiefgestellte Index y y ≤ 0,3 erfüllt.

5. Luftelektrode oder Wasserelektrolyseanode nach einem der Ansprüche 1 bis 4, wobei der tiefgestellte Index y 0,01 ≤ y ≤ 0,3 erfüllt.

6. Luftelektrode oder Wasserelektrolyseanode nach einem der Ansprüche 1 bis 5, wobei das elektronenleitfähige Material eine Perowskitkristallphase umfasst.

7. Luftelektrode oder Wasserelektrolyseanode nach einem der Ansprüche 1 bis 6, wobei das hydroxidionenleitfähige Material ein geschichtetes Doppelhydroxid mit einer grundlegenden Zusammensetzung enthält, die durch eine Formel:
M²⁺₁₋ₓM³⁺ₓ(OH)₂Aⁿ⁻_{x/n}·mH₂O dargestellt ist, wobei M²⁺ mindestens ein zweiwertiges Kation darstellt, M³⁺ mindestens ein dreiwertiges Kation darstellt, Aⁿ⁻ ein n-wertiges Anion darstellt, n eine ganze Zahl von 1 oder mehr ist, x 0,1 bis 0,4 ist und m 0 oder mehr ist.

8. Luftelektrode oder Wasserelektrolyseanode nach Anspruch 7, wobei M²⁺ Ni²⁺ umfasst, M³⁺ Fe³⁺ umfasst und Aⁿ⁻ NO³⁻ und/oder CO₃²⁻ umfasst.

9. Luftelektrode oder Wasserelektrolyseanode nach einem der Ansprüche 1 bis 6, wobei das hydroxidionenleitfähige Material ein Polymermaterial mit Hydroxidionenleitfähigkeit enthält.

10. Wasserelektrolyseanode nach einem der Ansprüche 1 bis 9, wobei die Wasserelektrolysevorrichtung einen hydroxidionenleitfähigen festen Elektrolyten und/oder eine hydroxidionenleitfähige Elektrolytlösung umfasst.

11. Wasserelektrolyseanode nach einem der Ansprüche 1 bis 10, wobei die Wasserelektrolysevorrichtung einen hydroxidionenleitfähigen festen Elektrolyten umfasst.

12. Mit einem Separator ausgestattete Luftelektrode, die umfasst:
die Luftelektrode nach einem der Ansprüche 1 bis 9; und
einen hydroxidionenleitfähigen Separator, der auf einer Seite der Luftelektrode angeordnet ist.

13. Mit einem festen Elektrolyten ausgestattete Wasserelektrolyseanode, die umfasst:
die Wasserelektrolyseanode nach einem der Ansprüche 1 bis 9; und
einen hydroxidionenleitfähigen festen Elektrolyten, der auf einer Seite der Wasserelektrolyseanode angeordnet ist.

14. Metall-Luft-Batterie, die umfasst:
die Luftelektrode nach einem der Ansprüche 1 bis 9 oder die mit einem Separator ausgestattete Luftelektrode nach Anspruch 12;
eine negative Metallelektrode; und
eine Elektrolytlösung.

15. Wasserelektrolysevorrichtung, die umfasst:
die Wasserelektrolyseanode nach einem der Ansprüche 1 bis 11;
eine Kathode; und
einen hydroxidionenleitfähigen festen Elektrolyten und/oder eine hydroxidionenleitfähige Elektrolytlösung.

## Revendications

1. Electrode à air ou anode d'électrolyse de l'eau pour une batterie métal-air ou un dispositif d'électrolyse de l'eau, comprenant un matériau conducteur d'électrons représenté par LaNi_{1-x-y}Cu_{xFe}yO_{3-δ}, où × > 0, y > 0, x + y < 1, et 0 ≤ δ ≤ 0,4, **caractérisée en ce que** le matériau conducteur d'électrons est en outre un catalyseur d'électrode à air ou un catalyseur d'anode d'électrolyse de l'eau, dans laquelle l'électrode à air ou l'anode d'électrolyse de l'eau comprend en outre un matériau conducteur d'ions hydroxyde, et dans laquelle l'électrode à air ou l'anode d'électrolyse de l'eau comprend le matériau conducteur d'électrons en une quantité de 15 à 70 % en volume par rapport à la quantité totale du matériau conducteur d'électrons et du matériau conducteur d'ions hydroxyde.

2. Electrode à air ou anode d'électrolyse de l'eau selon la revendication 1, dans laquelle l'indice x satisfait à x < 0,5.

3. Electrode à air ou anode d'électrolyse de l'eau selon l'une quelconque des revendications 1 et 2, dans laquelle l'indice x satisfait à 0,01 < x < 0,5.

4. Electrode à air ou anode d'électrolyse de l'eau selon l'une quelconque des revendications 1 à 3, dans laquelle l'indice y satisfait à y < 0,3.

5. Electrode à air ou anode d'électrolyse de l'eau selon l'une quelconque des revendications 1 à 4, dans laquelle l'indice y satisfait à 0,01 < y < 0,3.

6. Electrode à air ou anode d'électrolyse de l'eau selon l'une quelconque des revendications 1 à 5, dans laquelle le matériau conducteur d'électrons comprend une phase cristalline de perovskite.

7. Electrode à air ou anode d'électrolyse de l'eau selon l'une quelconque des revendications 1 à 6, dans laquelle le matériau conducteur d'ions hydroxyde contient un hydroxyde double lamellaire ayant une composition fondamentale représentée par la formule : M²⁺₁₋ₓM³⁺ₓ (OH)₂Aⁿ⁻_{x/n}•mH₂O, où M²⁺ représente au moins un cation divalent, M³⁺ représente au moins un cation trivalent, Aⁿ⁻ représente un anion de valence n, n est un entier valant 1 ou plus, x vaut de 0,1 à 0,4, et m vaut 0 ou plus.

8. Electrode à air ou anode d'électrolyse de l'eau selon la revendication 7, dans laquelle M²⁺ comprend Ni²⁺, M³⁺ comprend Fe³⁺, et Aⁿ⁻ comprend NO³⁻ et/ou CO₃²⁻.

9. Electrode à air ou anode d'électrolyse de l'eau selon l'une quelconque des revendications 1 à 6, dans laquelle le matériau conducteur d'ions hydroxyde contient un matériau polymère ayant une conductivité des ions hydroxyde.

10. Electrode à air ou anode d'électrolyse de l'eau selon l'une quelconque des revendications 1 à 9, dans laquelle le dispositif d'électrolyse de l'eau contient un électrolyte solide conducteur d'ions hydroxyde et/ou une solution électrolytique conductrice d'ions hydroxyde.

11. Electrode à air ou anode d'électrolyse de l'eau selon l'une quelconque des revendications 1 à 10, dans laquelle le dispositif d'électrolyse de l'eau contient un électrolyte solide conducteur d'ions hydroxyde.

12. Electrode à air équipée d'un séparateur, comprenant :
l'électrode à air selon l'une quelconque des revendications 1 à 9 ; et
un séparateur conducteur d'ions hydroxyde disposé sur un côté de l'électrode à air.

13. Anode d'électrolyse de l'eau équipée d'un électrolyte solide, comprenant :
l'anode d'électrolyse de l'eau selon l'une quelconque des revendications 1 à 9 ; et
un électrolyte solide conducteur d'ions hydroxyde disposé sur un côté de l'anode d'électrolyse de l'eau.

14. Batterie à métal-air comprenant :
l'électrode à air selon l'une quelconque des revendications 1 à 9 ou l'électrode à air équipée d'un séparateur selon la revendication 12 ;
une électrode négative métallique ; et
une solution électrolytique.

15. Dispositif d'électrolyse de l'eau comprenant :
l'anode d'électrolyse de l'eau selon l'une quelconque des revendications 1 à 11 ;
une cathode ; et
un électrolyte solide conducteur d'ions hydroxyde et/ou une solution électrolytique conductrice d'ions hydroxyde.
